# DEMANDE DE BREVET EUROPEEN

(11) **EP 1 746 824 A1**
(43) Date de publication de la demande: **24.01.2007**
(21) Numéro de dépôt: 06117609.5
(22) Date de dépôt: 20.07.2006
(51) Int. Cl.: H04N 5/765

(54) **Adaptation automatique d'une source vidéo à un récepteur**

(30) Priorité: 22.07.2005 FR 0552275
(71) Demandeur: STMICROELECTRONICS SA, 92120 Montrouge (FR)
(72) Inventeur: Descure, Pierrick, 38330, SAINT ISMIER (FR); Merval, Jean-Marc, 38113, VEUREY-VOROIZE (FR)
(74) Mandataire: de Beaumont, Michel

(57) **Abrégé**

L'invention concerne un système électronique (50) fournissant un signal vidéo (S_{OUT}) à une borne de sortie (F) destinée à être reliée à un récepteur (12) ayant une impédance d'entrée parmi deux impédances d'entrée, le système électronique comprenant un amplificateur adaptable (52) fournissant le signal vidéo et adapté à fonctionner selon une configuration de fonctionnement parmi deux configurations de fonctionnement, chaque configuration de fonctionnement étant adaptée à l'une des deux impédances d'entrée du récepteur ; un moyen de détection (54) de portions caractéristiques du signal vidéo ; et un moyen de mesure et de commande (56) adapté à mesurer un signal représentatif du courant fourni à la borne de sortie par le système électronique au cours de chaque portion caractéristique détectée, et à amener l'amplificateur adaptable à adopter l'une des deux configurations de fonctionnement à partir de la comparaison du signal représentatif mesuré à des seuils.

## Description

### Domaine de l'invention

La présente invention concerne l'adaptation d'un système électronique, appelé source, transmettant un signal vidéo analogique, généralement une tension variable, à un autre système électronique, appelé récepteur, par l'intermédiaire d'un moyen de transmission.

### Exposé de l'art antérieur

La présente invention concerne la transmission d'un signal vidéo entre une source qui correspond par exemple à un lecteur de disque vidéo du type DVD (de l'anglais Digital Versatile Disc), à une caméra ou à un boîtier décodeur (correspondant à l'expression anglaise Set Top Box) et un récepteur qui correspond par exemple à un écran d'affichage ou à un système d'enregistrement vidéo. Le moyen de transmission reliant la source au récepteur peut correspondre à un câble. Pour que le signal vidéo reçu par le récepteur soit le moins déformé possible, il est nécessaire que l'impédance de la source et l'impédance du récepteur soient égales à l'impédance caractéristique du moyen de transmission. On dit alors que la liaison est adaptée. L'impédance caractéristique d'un câble la plus utilisée pour la transmission d'un signal vidéo est de 75 ohms.

Différentes normes internationales, par exemple la norme EIA, définissent les caractéristiques des signaux vidéo utilisés pour de telles transmissions. Actuellement, pour effectuer une transmission avec la meilleure qualité possible tout en respectant les normes existantes, le signal vidéo comporte une composante continue non nulle et qui est transmise au récepteur. Une telle liaison est dite DC et un récepteur adapté à recevoir un signal vidéo à composante continue non nulle est appelé récepteur DC.

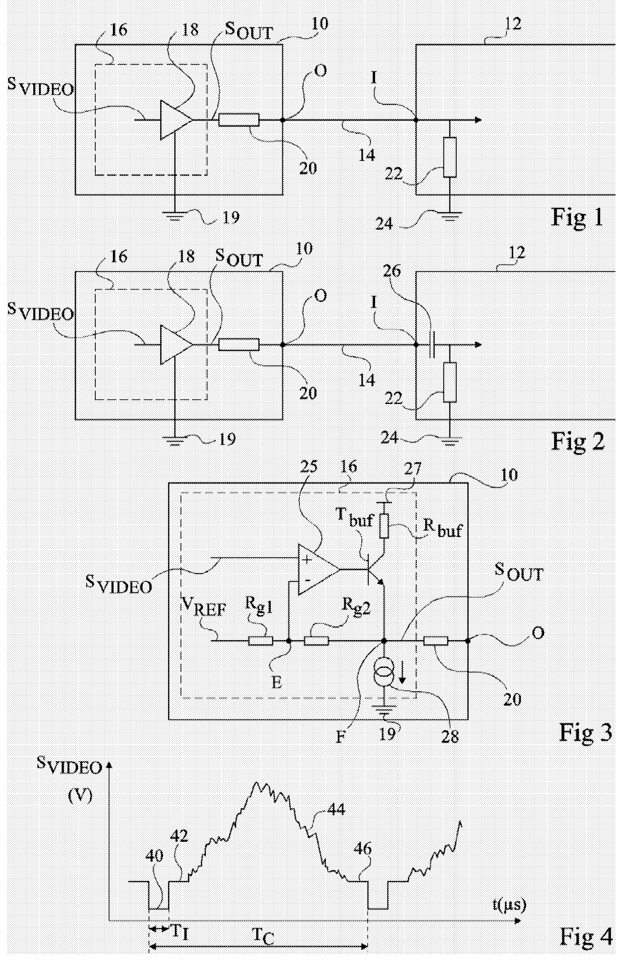

La figure 1 représente schématiquement une source 10 d'un signal vidéo S_{OUT} reliée à un récepteur DC 12 par un câble 14. La source 10 comprend un étage de sortie 16 comprenant un générateur 18 recevant un signal vidéo S_{VIDEO} et fournissant un signal vidéo S_{OUT}. Le générateur 18 est relié à une source d'un potentiel de référence 19, généralement la masse de la source 10. Une résistance 20 est prévue entre la sortie du générateur 18 et une borne de sortie O de la source 10. Le câble 14 est connecté entre la borne O et une borne I d'entrée du récepteur 12. Le récepteur DC 12 comprend une résistance 22 connectée entre la borne I et une source d'un potentiel de référence 24, généralement la masse du récepteur 12. Pour obtenir une liaison adaptée, les résistances 20 et 22 ont la même valeur que l'impédance caractéristique du câble 14.

Il existe certaines normes, par exemple la norme japonaise, qui imposent que le signal vidéo transmis sur le câble ne comporte pas de composante continue et qui, pour ce faire, prévoient que le récepteur comporte un élément capacitif en série à un élément résistif de façon à éliminer la composante continue du signal vidéo fourni par la source. Une telle liaison est dite AC et un récepteur adapté à recevoir un signal vidéo à composante continue nulle est appelé récepteur AC.

La figure 2 représente un schéma analogue à la figure 1 dans le cas d'une liaison AC. Le récepteur AC 12 comprend un condensateur 26 monté en série entre la borne I et la résistance 22.

Le récepteur auquel peut être reliée la source de signal vidéo a une impédance d'entrée qui peut donc être purement résistive ou comprendre une composante résistive et une composante capacitive. Dans le cas d'un récepteur DC, la source doit pouvoir fournir du courant alors que dans le cas d'un récepteur AC, la source doit pouvoir à la fois fournir et absorber du courant.

La figure 3 représente un exemple classique de réalisation d'une source de signal vidéo adaptée à être reliée à un récepteur DC ou à un récepteur AC. L'étage de sortie 16 comprend un circuit du type émetteur suiveur comportant un amplificateur différentiel 25 dont la borne positive (+) reçoit le signal vidéo S_{VIDEO} et dont la borne négative (-) est reliée à un noeud E. Une résistance R_{g1} est prévue entre le noeud E et une source d'une tension de référence V_{REF}. Une résistance R_{g2} est prévue entre le noeud E et un noeud F. La sortie de l'amplificateur 25 attaque la base d'un transistor bipolaire T_{buf} de type NPN dont le collecteur est relié par l'intermédiaire d'une résistance R_{buf} à une source d'un potentiel de référence 27, par exemple l'alimentation positive de la source 10, et dont l'émetteur est relié au noeud F. La résistance 20 est disposée entre les noeuds F et O. Un générateur de courant 28 est disposé entre le noeud F et la masse 19. La source 10 est susceptible d'absorber et de fournir du courant et peut donc être reliée à un récepteur AC ou à un récepteur DC. Toutefois, une telle source 10 présente l'inconvénient d'une forte consommation puisque le générateur de courant 28 délivre du courant de façon inutile lorsqu'elle est reliée à un récepteur DC.

### Résumé de l'invention

La présente invention prévoit une source de signal vidéo qui est susceptible d'être reliée, selon une liaison adaptée, à un récepteur dont l'impédance d'entrée est purement résistive ou comprend une composante résistive et une composante capacitive et qui a une consommation réduite quelle que soit la nature du récepteur auquel elle est reliée.

Un autre objet de la présente invention est de prévoir une source de signal vidéo de conception simple.

Dans ce but, la présente invention prévoit un système électronique fournissant un signal vidéo à une borne de sortie destinée à être reliée à un récepteur ayant une impédance d'entrée parmi deux impédances d'entrée. Le système électronique comprend un amplificateur adaptable fournissant le signal vidéo et adapté à fonctionner selon une configuration de fonctionnement parmi deux configurations de fonctionnement, chaque configuration de fonctionnement étant adaptée à l'une des deux impédances d'entrée du récepteur ; un moyen de détection de portions caractéristiques du signal vidéo ; et un moyen de mesure et de commande adapté à mesurer un signal représentatif du courant fourni à la borne de sortie par le système électronique au cours de chaque portion caractéristique détectée, et à amener l'amplificateur adaptable à adopter l'une des deux configurations de fonctionnement à partir de la comparaison du signal représentatif mesuré à des seuils.

Selon un mode de réalisation de l'invention, l'amplificateur adaptable fournit le signal vidéo sous la forme d'une succession de cycles, chaque cycle débutant par une impulsion, lesdites portions caractéristiques correspondant auxdites impulsions.

Selon un mode de réalisation de l'invention, l'amplificateur adaptable comprend un générateur de courant relié à la borne de sortie, ledit moyen de commande étant adapté à désactiver le générateur de courant lorsque la somme du courant fourni par le générateur de courant et du courant fourni à la borne de sortie est supérieure à un premier courant au cours d'une des portions caractéristiques et à activer le générateur de courant lorsque le courant fourni à la borne de sortie est inférieur à un second courant au cours d'une des portions caractéristiques, le second courant étant inférieur au premier courant.

Selon un mode de réalisation de l'invention, le système fournit un nombre donné de signaux de sortie audit nombre donné de bornes de sortie reliées chacune à un récepteur ayant une impédance d'entrée parmi deux impédances d'entrée, le système électronique comprenant ledit nombre donné d'amplificateurs adaptables fournissant chacun l'un dudit nombre donné de signaux vidéo, chaque amplificateur étant adapté à fonctionner selon une configuration de fonctionnement parmi deux configurations de fonctionnement, chaque configuration de fonctionnement étant adaptée à l'une des deux impédances d'entrée du récepteur ; un moyen de détection de portions caractéristiques d'un signal vidéo parmi ledit nombre de signaux vidéo ; et ledit nombre de moyens de commande, chaque moyen de commande étant adapté à mesurer un signal représentatif du courant fourni par l'un des amplificateurs adaptables à la borne de sortie associée pendant chaque portion caractéristique détectée et à amener ledit amplificateur adaptable à adopter l'une des deux configurations de fonctionnement à partir de la comparaison du signal représentatif mesuré à des seuils.

Selon un mode de réalisation de l'invention, l'amplificateur adaptable comprend un amplificateur différentiel dont une première entrée reçoit un signal vidéo d'entrée et dont une seconde entrée est reliée à un noeud, ledit noeud étant relié à une source d'une tension de référence par l'intermédiaire d'une première résistance et à la borne de sortie par l'intermédiaire d'une deuxième résistance, la sortie de l'amplificateur différentiel étant reliée à la borne de commande d'un premier transistor dont une première borne principale est reliée à la borne de sortie et dont une seconde borne principale est reliée à une source d'un premier potentiel de référence par l'intermédiaire d'une troisième résistance, le générateur de courant comprenant un deuxième transistor dont une première borne principale est reliée à la borne de sortie et dont une seconde borne principale est reliée à une source d'un second potentiel de référence.

Selon un mode de réalisation de l'invention, le générateur de courant comprend un interrupteur disposé entre la borne de commande du deuxième transistor et la source du second potentiel de référence.

Selon un mode de réalisation de l'invention, le moyen de commande comprend des troisième et quatrième transistors dont les bornes de commande sont reliées en commun à une première borne principale du troisième transistor, une seconde borne principale du troisième transistor étant reliée à la source du premier potentiel de référence par l'intermédiaire d'une quatrième résistance, la première borne principale du troisième transistor étant reliée à la source du second potentiel de référence par l'intermédiaire d'une cinquième résistance, une première borne principale du quatrième transistor étant reliée à la seconde borne principale du premier transistor par l'intermédiaire d'une sixième résistance, une seconde borne principale du quatrième transistor étant reliée à la source du second potentiel de référence par l'intermédiaire d'une septième résistance, le signal représentatif étant la tension aux bornes de la septième résistance.

Selon un mode de réalisation de l'invention, le moyen de commande comprend un comparateur à hystérésis recevant le signal représentatif mesuré et étant adapté à fermer l'interrupteur lorsque le signal représentatif est supérieur à une première tension et à ouvrir l'interrupteur lorsque le signal représentatif est inférieur à une seconde tension inférieure à la première tension.

Selon un mode de réalisation de l'invention, le moyen de commande comprend un moyen de mémorisation du signal représentatif relié au comparateur à hystérésis ; et un interrupteur commandé par le module de détection et disposé entre le moyen de mémorisation et la première borne principale du quatrième transistor.

La présente invention prévoit également un procédé d'adaptation d'un système électronique fournissant un signal vidéo à une borne de sortie destinée à être reliée à un récepteur ayant une impédance d'entrée parmi deux impédances d'entrée. Le procédé comprend les étapes consistant à prévoir un amplificateur adaptable fournissant le signal vidéo et adapté à fonctionner selon une configuration de fonctionnement parmi deux configurations de fonctionnement, chaque configuration de fonctionnement étant adaptée à l'une des deux impédances d'entrée du récepteur ; à détecter des portions caractéristiques du signal vidéo ; à mesurer un signal représentatif du courant fourni par le système électronique à la borne de sortie au cours de chaque portion caractéristique détectée ; et à amener l'amplificateur adaptable à adopter l'une des deux configurations de fonctionnement à partir de la comparaison du signal représentatif mesuré à des seuils.

### Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :
les figures 1 et 2, précédemment décrites, représentent schématiquement une source de signal vidéo classique reliée respectivement à un récepteur DC et à un récepteur AC ;
la figure 3, précédemment décrite, représente un exemple classique de source susceptible d'être reliée indifféremment à un récepteur DC ou à un récepteur AC ;
la figure 4 représente un exemple de signal vidéo composite ;
la figure 5 illustre schématiquement le principe de fonctionnement d'un exemple de réalisation d'une source de signal vidéo selon la présente invention ;
la figure 6 représente un exemple de réalisation plus détaillé de la source de la figure 5 ;
la figure 7 représente la relation entre une tension et un courant caractéristiques mis en oeuvre dans la présente invention ;
la figure 8 représente une variante d'un élément de la source de la figure 6 ;
la figure 9 représente une variante de signaux vidéo susceptibles d'être fournis par une source de signal vidéo ; et
la figure 10 représente une variante de réalisation d'une source de signal vidéo selon la présente invention.

### Description détaillée

Dans les figures, de mêmes références désignent des éléments identiques ou des éléments similaires exerçant des fonctions identiques. En outre, dans la suite de la description, on désigne par borne de commande d'un transistor, la base d'un transistor bipolaire et la grille d'un transistor MOS et on désigne par borne principale d'un transistor, l'émetteur ou le collecteur d'un transistor bipolaire et le drain ou la source d'un transistor MOS.

La présente invention prévoit d'amener la source de signal vidéo à détecter automatiquement la nature du récepteur auquel elle est reliée de façon que la source s'adapte au récepteur pour conserver une consommation réduite.

Une possibilité pour distinguer la nature du récepteur est de mesurer le courant moyen fourni par la source lorsqu'elle est reliée au récepteur. En effet, le courant moyen est sensiblement nul pour un récepteur AC et n'est généralement pas nul pour un récepteur DC (la valeur moyenne du signal vidéo S_{OUT} étant généralement différente de 0). Toutefois, le signal vidéo S_{OUT} est un signal très irrégulier et la détermination d'une valeur moyenne de courant représentative de la nature du récepteur nécessiterait l'acquisition d'échantillons sur une durée importante. Un tel procédé de détection de la nature du récepteur serait donc peu réactif et aurait un coût en consommation important.

La présente invention prévoit de réaliser une détection automatique de la nature du récepteur par la mesure d'un signal représentatif du courant fourni par la source au récepteur à des instants particuliers pour lesquels le signal vidéo fourni par la source est constant et conserve la même valeur aux différents instants de mesure. Le courant mesuré à de tels instants a donc une valeur sensiblement constante qui va dépendre de la nature du récepteur. En fonction du courant mesuré, la source adopte une caractéristique de fonctionnement parmi deux caractéristiques de fonctionnement possibles, l'une étant adaptée à un récepteur DC et l'autre à un récepteur AC. A titre d'exemple, la source comprend un générateur de courant qui est désactivé lorsqu'un récepteur DC est détecté et qui est activé lorsqu'un récepteur AC est détecté.

La figure 4 représente un exemple classique du signal vidéo S_{VIDEO} reçu par l'étage de sortie d'une source de signal vidéo. Un tel signal est appelé signal vidéo composite ou signal CVBS (acronyme anglais pour Chroma Video Blanking Synchro). Le signal S_{VIDEO} est un signal cyclique pour lequel la durée T_{C} d'un cycle, par exemple de 64 µs, correspond à la durée du balayage d'une ligne d'un écran et du retour à la ligne suivante. Un cycle débute par une impulsion 40 de durée T_{I}, par exemple de 4,7 µs. Lorsque le récepteur 12 est un écran d'affichage, les impulsions 40 sont utilisées pour fournir des signaux de synchronisation pour commander le balayage de l'écran. Pour cette raison, les impulsions 40 sont généralement appelées impulsions de synchronisation. Pour chaque cycle, l'impulsion 40 est suivie successivement d'un palier de niveau constant 42, représentatif du niveau de "noir" de l'image, d'une portion de niveau variable 44, qui correspond au contenu informationnel proprement dit d'une ligne de l'image, c'est-à-dire à la luminance et à la chrominance. La portion variable 44 est suivie d'un palier 46 du niveau de noir qui clôt le cycle. Une mesure de courant est susceptible d'être réalisée pour chaque cycle pendant l'impulsion 40 de début de cycle ou pendant les paliers 42, 46. En pratique, les impulsions 40 étant faciles à détecter, un exemple de réalisation de la présente invention prévoit de réaliser la détection d'un signal représentatif du courant fourni par la source pendant les impulsions du signal vidéo composite S_{VIDEO}.

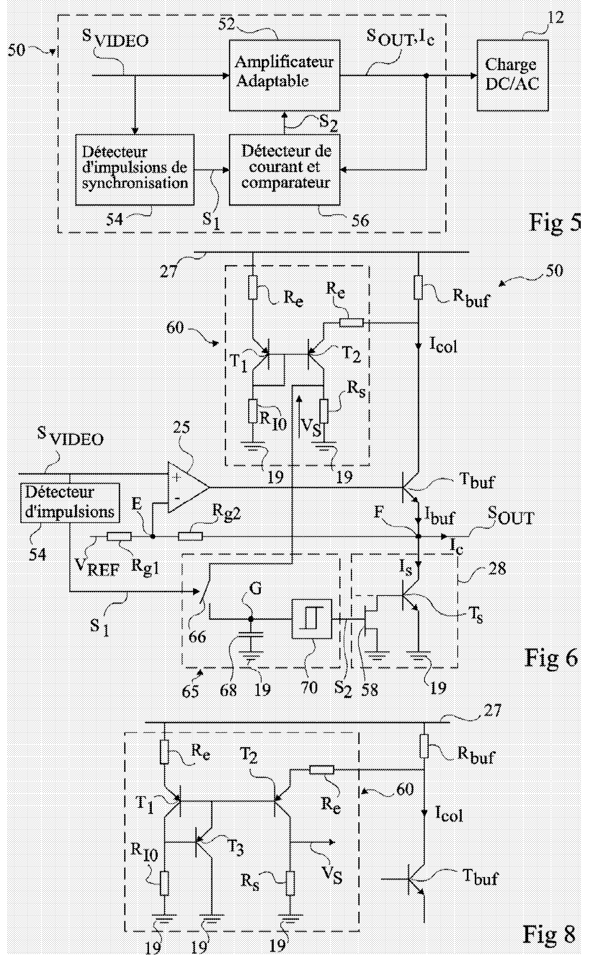

La figure 5 illustre le principe de fonctionnement d'un exemple de réalisation d'une source 50 de signal vidéo selon l'invention. L'étage de sortie comprend un amplificateur adaptable 52 qui reçoit le signal vidéo S_{VIDEO} et qui fournit un signal vidéo S_{OUT} et un courant I_{c} au récepteur 12. L'étage de sortie comprend un module 54 de détection des impulsions de synchronisation contenues dans le signal vidéo S_{VIDEO} qui fournit, à chaque détection d'une impulsion 40, un signal de commande S₁ à un module de mesure de courant et de comparaison 56. A chaque impulsion détectée, le module 56 détermine un signal représentatif du courant I_{c} fourni par la source 50 et compare la valeur déterminée à des seuils. En fonction du résultat de la comparaison, le module 56 fournit un signal de commande S₂ à l'amplificateur 52 qui adopte une caractéristique de fonctionnement adaptée à un récepteur DC ou à un récepteur AC.

La figure 6 représente un exemple de réalisation plus détaillé de l'étage de sortie de la source 50 de la figure 5. Les éléments communs avec l'étage de sortie 16 représenté en figure 3 sont désignés avec les mêmes références. En particulier, on retrouve l'amplificateur différentiel 25, le transistor de puissance T_{buf} monté en émetteur-suiveur et les résistances R_{g1} et R_{g2}. Dans le présent exemple de réalisation, le générateur de courant 28 est constitué d'un transistor bipolaire Tₛ de type NPN dont le collecteur est relié au noeud F et dont l'émetteur est relié à la masse 19. La base du transistor Tₛ est reliée à un circuit de fourniture d'un signal de polarisation, non représenté, et au drain d'un transistor MOS 58 de type N dont la source est reliée à la masse 19. La base du transistor 58 reçoit le signal S₂. Le module de mesure de courant et de comparaison comprend un circuit 60 de mesure de courant qui, dans le présent exemple de réalisation, comprend une paire de transistors bipolaires T₁, T₂ de type PNP dont les bases sont reliées en commun au collecteur du transistor T₁. L'émetteur du transistor T₁ est relié par l'intermédiaire d'une résistance Rₑ à la source du potentiel de référence 27 et le collecteur du transistor T₁ est relié par l'intermédiaire d'une résistance R_{I0} à la masse 19. L'émetteur du transistor T₂ est relié par l'intermédiaire d'une résistance Rₑ au collecteur du transistor de puissance T_{buf} et le collecteur du transistor T₂ est relié par l'intermédiaire d'une résistance R_{S} à la masse 19. On note V_{S} la tension aux bornes de la résistance R_{S}. Le module de mesure de courant comprend un module d'échantillonnage et de comparaison 65 qui comporte un interrupteur commandable 66 dont une borne est reliée au collecteur du transistor T₂ et dont l'autre borne est reliée à un noeud G. Un condensateur 68 est prévu entre le noeud G et la masse 19. La tension aux bornes du condensateur 68 attaque un comparateur à hystérésis 70 qui fournit le signal S₂. L'interrupteur 66 est commandé par le signal S₁ fourni par le module de détection d'impulsions de synchronisation 54 qui reçoit le signal vidéo S_{VIDEO}. Le module de détection d'impulsions de synchronisation 54 est un élément utilisé de façon classique, notamment par un récepteur correspondant à un écran d'affichage, et ne sera pas décrit plus en détail dans la présente description.

Le fonctionnement de l'étage de sortie selon le présent exemple de réalisation va maintenant être décrit. La tension V_{S} est représentative du courant I_{col} reçu par le collecteur du transistor T_{buf} lui-même sensiblement égal au courant I_{buf} fourni par l'émetteur du transistor T_{buf}. Le courant I_{buf} est égal à la somme du courant I_{c} fourni par la source 50 à la charge 12 et du courant Iₛ absorbé par le générateur de courant 28. A chaque impulsion du signal vidéo S_{VIDEO}, le module de détection d'impulsions 54 fournit un signal S₁ qui entraîne la fermeture de l'interrupteur 66. La tension V_{S} est alors appliquée aux bornes du condensateur 68. A partir de la comparaison de la tension V_{S} à des tensions de seuil, il est possible de déterminer si le récepteur relié à la source 50 est un récepteur AC ou un récepteur DC et de bloquer ou de rendre passant le transistor 58, ce qui respectivement active ou annule le courant Iₛ par l'intermédiaire du transistor Tₛ.

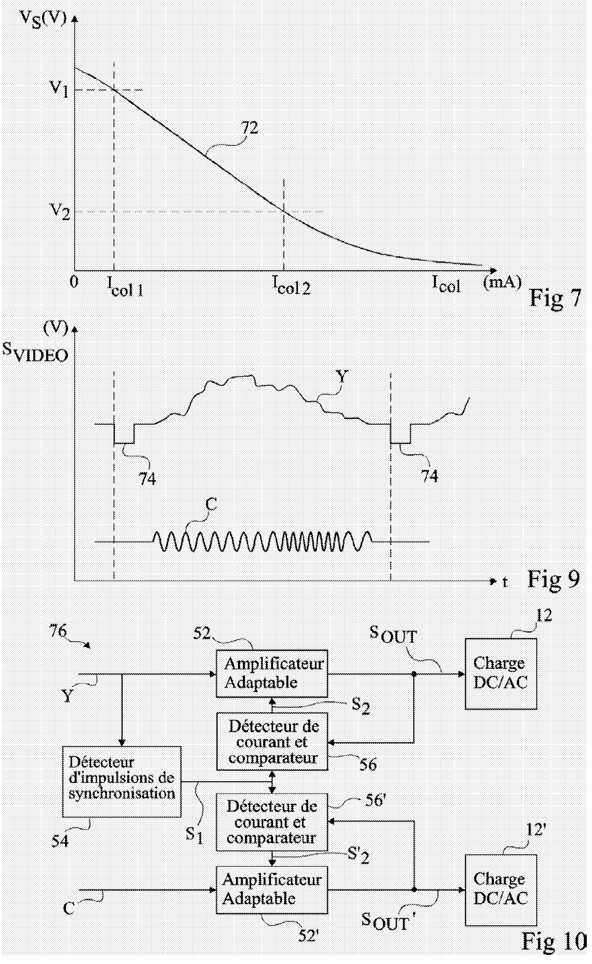

La figure 7 illustre la courbe d'évolution 72 de la tension V_{S} en fonction du courant I_{col}. On notera que la courbe 72 comprend une portion centrale sensiblement linéaire dont l'étendue est définie par les valeurs des résistances Rₑ, Rₛ et R_{I0}.

Un exemple de détermination des tensions de seuil utilisées par le comparateur 70 va maintenant être décrit. Lorsque la source 50 est reliée à un récepteur DC, on détermine la valeur théorique I_{cth} du courant I_{c} fourni au récepteur DC, en supposant que le générateur de courant 28 est désactivé, à partir de la valeur de la tension fournie par la source lors d'une impulsion du signal S_{VIDEO}. A titre d'exemple, lors d'une impulsion du signal S_{VIDEO}, le courant I_{cth} est de l'ordre de 2 mA. Lorsque la source 50 est reliée à un récepteur AC, la valeur théorique Iₛₜₕ du courant Iₛ devant être fourni par le générateur de courant 28 est définie par la valeur minimale négative que peut atteindre la tension aux bornes de la résistance du récepteur en série avec le condensateur d'entrée du récepteur. A titre d'exemple, le courant Iₛₜₕ est de l'ordre de 8 mA.

Lorsque le générateur de courant 28 est désactivé, c'est-à-dire lorsque le transistor MOS 58 est passant, si le courant I_{c'} c'est-à-dire I_{col'} diminue en deçà de I_{cth}, cela signifie que le récepteur n'est pas du type DC mais du type AC. Le générateur de courant 28 étant désactivé, on peut donc déterminer la présence d'un récepteur AC ou DC en comparant le courant I_{col} à un seuil minimum I_{col1}, par exemple de 1 mA. Ceci revient à comparer la tension V_{S} à une tension de seuil V₁. Si V_{S} est supérieur à V₁, cela signifie que la source 50 est reliée à un récepteur AC. Le transistor MOS 58 est alors bloqué, ce qui active le générateur de courant 28. Le courant Iₛ est alors présent.

Lorsque le générateur de courant 28 est activé, si le courant I_{col} est supérieur au courant théorique Iₛₜₕ fourni par le générateur de courant 28, cela signifie que le récepteur n'est pas du type AC mais du type DC. Le générateur de courant 28 étant activé, on peut donc déterminer la présence d'un récepteur AC ou DC en comparant le courant I_{col} à un seuil maximum I_{col2}, par exemple de l'ordre de 9 mA. Ceci revient à comparer la tension V_{S} à une tension de seuil V₂. Si V_{S} est inférieur à V₂, cela signifie que la source 50 est reliée à un récepteur DC. Le transistor MOS 58 est alors rendu passant ce qui désactive le générateur de courant 28. Le courant I_{S} devient nul.

Les tensions de seuil V₁ et V₂ sont déterminées à partir de la courbe 72 de la figure 7. A titre d'exemple, avec I_{col1} égal à 1 mA et I_{col2} égal à 9 mA, les résistances Rₑ, Rₛ et R_{I0} peuvent être choisies pour que les tensions de seuil V₁ et V₂ soient respectivement de l'ordre de 4 V et 1,5 V avec R_{buf} de l'ordre d'une dizaine d'ohms.

La figure 8 représente une variante de réalisation du module de détection de courant 60 dans lequel on prévoit un transistor supplémentaire T₃ dont la base est reliée au collecteur du transistor T₁, dont le collecteur est relié à la masse 19 et dont l'émetteur est relié aux bases des transistors T₁ et T₂. Une telle variante permet d'améliorer la stabilité avec la température de la courbe 72 d'évolution de la tension V_{S} en fonction du courant I_{col}.

Dans certaines applications, l'étage de sortie de la source de signal vidéo fournit des signaux vidéo différents sur des sorties distinctes. Il s'agit par exemple de signaux de type Y/C (également appelé signal S-vidéo) comprenant un signal de luminance (signal Y) et un signal de chrominance (signal C). Les sorties de la source peuvent être reliées à des récepteurs de natures différentes. De ce fait, une mesure de courant doit être réalisée au niveau de chaque sortie de la source.

La figure 9 représente un exemple d'évolution des signaux Y et C. De façon générale, seul le signal de luminance Y comporte des impulsions de synchronisation 74. Le signal de chrominance C ne comporte pas d'impulsions de synchronisation mais seulement des paliers de niveaux constants entre deux cycles.

La figure 10 représente un exemple de réalisation d'un étage de sortie selon l'invention d'une source 76 adaptée à fournir deux signaux vidéo S_{OUT} et S_{OUT'} à deux récepteurs 12 et 12' éventuellement de natures différentes. A titre d'exemple, les signaux S_{OUT} et S_{OUT'} sont fournis respectivement à partir des signaux Y et C. La présente invention prévoit que les circuits de fourniture des signaux vidéo S_{OUT} et S_{OUT'} comprennent chacun un amplificateur adaptable 52, 52' recevant un signal de commande S₂, S₂, fourni par un module de mesure de courant et de comparaison 56, 56' comme cela a été décrit précédemment en relation à la figure 5. Les signaux Y et C étant synchrones et comme seul le signal Y comprend des impulsions de synchronisation 74, l'étage de sortie de la source 76 comprend un module de détection de synchronisation 54 unique qui fournit le même signal de commande S₁ aux modules de mesure de courant et de comparaison 56, 56'.

De façon plus générale, dans le cas de signaux vidéo complexes composés de plusieurs signaux, par exemple des signaux vidéo de type YUV (également appelé signal Y-Pr-Pb ou Y-Cb-Cr), la présente invention prévoit d'utiliser un seul module de détection d'impulsions de synchronisation qui commande chaque module de mesure de courant et de comparaison associé à chaque circuit de fourniture d'une composante du signal vidéo.

Bien entendu, la présente invention est susceptible de diverses variantes et modifications qui apparaîtront à l'homme de l'art. En particulier, dans les exemples de réalisation précédemment décrits, la source du potentiel de référence 27 correspond à l'alimentation positive. Toutefois, une telle source 27 peut correspondre à une alimentation négative, la polarité des transistors bipolaires étant alors inversée.

## Revendications

1. Système électronique (50 ; 76) fournissant un signal vidéo (S_{OUT}, S_{OUT'}) à une borne de sortie (F) destinée à être reliée à un récepteur (12, 12') ayant une impédance d'entrée parmi deux impédances d'entrée, le système électronique comprenant :
un amplificateur adaptable (52, 52') fournissant le signal vidéo et adapté à fonctionner selon une configuration de fonctionnement parmi deux configurations de fonctionnement, chaque configuration de fonctionnement étant adaptée à l'une des deux impédances d'entrée du récepteur ;
un moyen de détection (54) de portions caractéristiques (40 ; 74) du signal vidéo ; et
un moyen de mesure et de commande (56, 56') adapté à mesurer un signal représentatif (V_{S}) du courant fourni à la borne de sortie par le système électronique au cours de chaque portion caractéristique détectée, et à amener l'amplificateur adaptable à adopter l'une des deux configurations de fonctionnement à partir de la comparaison du signal représentatif mesuré à des seuils (V₁, V₂).

2. Système électronique selon la revendication 1, dans lequel l'amplificateur adaptable (52, 52') fournit le signal vidéo (S_{OUT}) sous la forme d'une succession de cycles, chaque cycle débutant par une impulsion (40 ; 74), lesdites portions caractéristiques correspondant auxdites impulsions.

3. Système électronique selon la revendication 1, dans lequel l'amplificateur adaptable (52, 52') comprend un générateur de courant (28) relié à la borne de sortie (F), ledit moyen de commande (56, 56') étant adapté à désactiver le générateur de courant lorsque la somme du courant (Iₛ) fourni par le générateur de courant et du courant (I_{c}) fourni à la borne de sortie est supérieure à un premier courant (I_{col2}) au cours d'une des portions caractéristiques (40) et à activer le générateur de courant lorsque le courant fourni à la borne de sortie est inférieur à un second courant (I_{col1}) au cours d'une des portions caractéristiques, le second courant étant inférieur au premier courant.

4. Système électronique selon la revendication 1, fournissant un nombre donné de signaux de sortie (S_{OUT}, S_{OUT'}) audit nombre donné de bornes de sortie (F) reliées chacune à un récepteur (12, 12') ayant une impédance d'entrée parmi deux impédances d'entrée, le système électronique comprenant :
ledit nombre donné d'amplificateurs adaptables (52, 52') fournissant chacun l'un dudit nombre donné de signaux vidéo, chaque amplificateur étant adapté à fonctionner selon une configuration de fonctionnement parmi deux configurations de fonctionnement, chaque configuration de fonctionnement étant adaptée à l'une des deux impédances d'entrée du récepteur ;
un moyen de détection (54) de portions caractéristiques (40) d'un signal vidéo parmi ledit nombre de signaux vidéo ; et
ledit nombre de moyens de commande (56, 56'), chaque moyen de commande étant adapté à mesurer un signal représentatif (V_{S}) du courant fourni par l'un des amplificateurs adaptables à la borne de sortie associée pendant chaque portion caractéristique détectée et à amener ledit amplificateur adaptable à adopter l'une des deux configurations de fonctionnement à partir de la comparaison du signal représentatif mesuré à des seuils (V₁, V₂).

5. Système électronique selon la revendication 3, dans lequel l'amplificateur adaptable (52, 52') comprend un amplificateur différentiel (25) dont une première entrée reçoit un signal vidéo d'entrée (S_{VIDEO}) et dont une seconde entrée est reliée à un noeud (E), ledit noeud étant relié à une source d'une tension de référence (V_{REF}) par l'intermédiaire d'une première résistance (R_{g1}) et à la borne de sortie (F) par l'intermédiaire d'une deuxième résistance (R_{g2}), la sortie de l'amplificateur différentiel étant reliée à la borne de commande d'un premier transistor (T_{buf}) dont une première borne principale est reliée à la borne de sortie et dont une seconde borne principale est reliée à une source (27) d'un premier potentiel de référence par l'intermédiaire d'une troisième résistance (R_{buf}), le générateur de courant (28) comprenant un deuxième transistor (T_{S}) dont une première borne principale est reliée à la borne de sortie et dont une seconde borne principale est reliée à une source (19) d'un second potentiel de référence.

6. Système électronique selon la revendication 5, dans lequel le générateur de courant (28) comprend un interrupteur (58) disposé entre la borne de commande du deuxième transistor (T_{S}) et la source (19) du second potentiel de référence.

7. Système électronique selon la revendication 6, dans lequel le moyen de commande (56, 56') comprend des troisième et quatrième transistors (T₁, T₂) dont les bornes de commande sont reliées en commun à une première borne principale du troisième transistor, une seconde borne principale du troisième transistor (T₁) étant reliée à la source (27) du premier potentiel de référence par l'intermédiaire d'une quatrième résistance (Rₑ), la première borne principale du troisième transistor étant reliée à la source (19) du second potentiel de référence par l'intermédiaire d'une cinquième résistance (R_{I0}), une première borne principale du quatrième transistor (T₂) étant reliée à la seconde borne principale du premier transistor (T_{buf}) par l'intermédiaire d'une sixième résistance (Rₑ), une seconde borne principale du quatrième transistor étant reliée à la source du second potentiel de référence par l'intermédiaire d'une septième résistance (R_{S}), le signal représentatif (V_{S}) étant la tension aux bornes de la septième résistance.

8. Système électronique selon la revendication 7, dans lequel le moyen de commande (56, 56') comprend un comparateur à hystérésis (70) recevant le signal représentatif (V_{S}) mesuré et étant adapté à fermer l'interrupteur (58) lorsque le signal représentatif est supérieur à une première tension (V₁) et à ouvrir l'interrupteur lorsque le signal représentatif est inférieur à une seconde tension (V₂) inférieure à la première tension.

9. Système électronique selon la revendication 8, dans lequel le moyen de commande (56, 56') comprend :
un moyen de mémorisation (68) du signal représentatif (V_{S}) relié au comparateur à hystérésis (70) ; et
un interrupteur (66) commandé par le module de détection (54) et disposé entre le moyen de mémorisation et la première borne principale du quatrième transistor (T₂).

10. Procédé d'adaptation d'un système électronique (50 ; 76) fournissant un signal vidéo (S_{OUT}, S_{OUT'}) à une borne de sortie (F) destinée à être reliée à un récepteur (12, 12') ayant une impédance d'entrée parmi deux impédances d'entrée, le procédé comprenant les étapes suivantes :
prévoir un amplificateur adaptable (52, 52') fournissant le signal vidéo et adapté à fonctionner selon une configuration de fonctionnement parmi deux configurations de fonctionnement, chaque configuration de fonctionnement étant adaptée à l'une des deux impédances d'entrée du récepteur ;
détecter des portions caractéristiques (40) du signal vidéo ;
mesurer un signal représentatif (V_{S}) du courant fourni par le système électronique à la borne de sortie au cours de chaque portion caractéristique détectée ; et
amener l'amplificateur adaptable à adopter l'une des deux configurations de fonctionnement à partir de la comparaison du signal représentatif mesuré à des seuils (V₁, V₂).
